# EUROPÄISCHE PATENTSCHRIFT

(11) **EP 4 500 153 B1**
(45) Veröffentlichungstag und Bekanntmachung des Hinweises auf die Patenterteilung: **28.10.2026**
(21) Anmeldenummer: 23711011.9
(22) Anmeldetag: 10.03.2023
(51) Int. Cl.: G01N 21/64

(54) **BELEUCHTUNGSVORRICHTUNG ZUM BELEUCHTEN EINER MIKROFLUIDISCHEN EINRICHTUNG UND VERFAHREN ZUM BELEUCHTEN EINER MIKROFLUIDISCHEN EINRICHTUNG**
ILLUMINATION APPARATUS FOR ILLUMINATING A MICROFLUIDIC DEVICE AND METHOD FOR ILLUMINATING A MICROFLUIDIC DEVICE
APPAREIL D'ÉCLAIRAGE POUR ÉCLAIRAGE D'UN DISPOSITIF MICROFLUIDIQUE ET PROCÉDÉ D'ÉCLAIRAGE D'UN DISPOSITIF MICROFLUIDIQUE

(30) Priorität: 24.03.2022 DE 102022202863
(43) Veröffentlichungstag der Anmeldung: 05.02.2025
(73) Patentinhaber: Robert Bosch GmbH, 70442 Stuttgart (DE)
(72) Erfinder: FIESS, Reinhold, 77770 Durbach (DE); RAMSTEINER, Ingo, 76275 Ettlingen (DE)
(86) Internationale Anmeldenummer: PCT/EP2023/056192
(87) Internationale Veröffentlichungsnummer: WO 2023/180099

(56) Entgegenhaltungen:
- EP-A1- 3 321 649
- US-A1- 2009 201 577
- US-A1- 2018 353 957

## Beschreibung

### Stand der Technik

Die Erfindung geht von einer Beleuchtungsvorrichtung, einem Analysegerät mit einer Beleuchtungsvorrichtung und einem Verfahren zum Beleuchten nach Gattung der unabhängigen Ansprüche aus.

Zum Analysieren von Probenmaterial können sogenannte Lab-on-Chip-Kartuschen mit einer Probe in Analysegeräte eingegeben und prozessiert werden. Dabei kann zum Beispiel ein molekulardiagnostisches Assay auf einer Kunststoffkartusche mit einem mikrofluidischen Netzwerk angeordnet sein. Das Analysegerät kann konstruiert sein, solche Kartuschen zu prozessieren, das heißt es kann mikrofluidische Vorgänge auf der Kartusche steuern und beispielsweise bestimmte Bereiche heizen oder beleuchten.

EP 3 321 649 A1 offenbart ein Mikrospektrometer für ein mobiles Gerät, beispielsweise ein Smartphone. Dazu wird ein Fluoreszenzelement eingesetzt, das unter Verwendung eines Anregungsstrahls einen Beleuchtungsstrahl zum Beleuchten einer mittels des Mikrospektrometers zu analysierenden Probe erzeugt.

US 2018/353957 A1 offenbart ein System zum Analysieren einer Probe einer mikrofluidischen Kartusche. Das System offenbart eine Quelle elektromagnetischer Strahlung und einen Scanspiegel zum Umlenken der Strahlung zu einer Probenplatte.

US 2009/201 577 A1 offenbart eine Vorrichtung zur Belichtung von Molekülen einer Probe in einem Fluoreszenzmikroskop mit einer lichtemittierenden Diode und einem optischen Element mit einem Leuchtstoff. Die LED emittiert Licht mit einer ersten Wellenlänge; der Leuchtstoff ist in der Lage, das Licht mit der ersten Wellenlänge zu empfangen und Licht mit einer vorgewählten zweiten Wellenlänge zu emittieren, die sich von der ersten Wellenlänge unterscheidet. Die zweite Wellenlänge entspricht im Wesentlichen der Wellenlänge der Spitzenanregung der Moleküle.

### Offenbarung der Erfindung

Vor diesem Hintergrund werden mit dem hier vorgestellten Ansatz eine Beleuchtungsvorrichtung, ein Analysegerät mit einer Beleuchtungsvorrichtung und ein Verfahren zum Beleuchten gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Mit der hier vorgestellten Beleuchtungsvorrichtung ist vorteilhafterweise die Beleuchtung von einer oder mehrerer zusammenhängender Flächen, beispielsweise auf einer Lab-on-Chip-Kartusche, mit Licht möglich. Anzahl, Form und Ausdehnung der Flächen können dabei innerhalb eines gewissen Bereichs frei wählbar und flexibel elektronisch steuerbar sein. Das Licht selbst kann vorteilhafterweise die Anforderungen für eine Fluoreszenz-Anregung molekulardiagnostischer Assays erfüllen, auch mit mehreren Farbkanälen. Dies bedeutet ein in Zentralwellenlänge und Breite genau definiertes Spektrum, beziehungsweise mehrere solcher Spektren, zwischen denen man umschalten kann.

Gemäß Anspruch 1 wird eine Beleuchtungsvorrichtung zum Beleuchten einer in einem Aufnahmebereich eines Analysegeräts angeordneten mikrofluidischen Einrichtung vorgestellt.

Beispielsweise kann es sich bei dem Analysegerät um ein Gerät zum Durchführen von diagnostischen Tests, wie beispielsweise PCR-Schnelltests, handeln. Dabei kann eine Probe, bei der es sich beispielsweise um eine Flüssigkeit mit Probenmaterial oder eine feste Probe handeln kann, zum Beispiel in eine geeignete mikrofluidische Einrichtung eingegeben werden, bei der es sich beispielsweise um eine Lab-on-Chip-Kartusche mit einem mikrofluidischen Netzwerk zum Prozessieren der Probe handeln kann. Die mikrofluidische Einrichtung mit der Probe kann beispielsweise manuell in den Aufnahmebereich des Analysegeräts eingegeben werden, um innerhalb des Analysegeräts prozessiert zu werden. Hierbei kann die Probe durch ein Beleuchten derselben mittels der hier beschriebenen Beleuchtungsvorrichtung, die auch als Phosphorschirm bezeichnet werden kann, angeregt werden. Dabei ist mit der hier vorgestellten Beleuchtungsvorrichtung vorteilhafterweise die Beleuchtung von einer oder mehreren Flächen auf einer Lab-on-Chip-Kartusche möglich. Das zum Beleuchten verwendete Licht kann hierbei die Anforderungen für eine Fluoreszenz-Anregung molekulardiagnostischer Assays erfüllen. Viele molekulardiagnostische Verfahren, wie zum Beispiel Polymerase-Kettenreaktionen (PCR), stützten sich aus messtechnischer Sicht auf Fluoreszenzmessungen. Dabei kann die indirekte Erzeugung von Licht mittels fluoreszierender oder phosphoreszierender Leuchtstoffe notwendig sein. Dies kann mittels der Fluoreszenzlage der hier vorgestellten Beleuchtungsvorrichtung vorteilhafterweise ermöglicht werden. Die Beleuchtungsvorrichtung, die auch als Phosphorschirm bezeichnet werden kann, umfasst ein Trägerelement aus einem transparenten Substrat, das auf der einen Seite mit einem oder verschiedenen fluoreszenzfähigen Leuchtstoffen beschichtet sein kann. Aus historischen Gründen können diese auch als Phosphore bezeichnet werden, was jedoch nichts mit dem gleichnamigen chemischen Element zu tun hat. Sie können mehrere Material- und Metamaterialklassen wie zum Beispiel dotierte anorganische kristalline oder amorphe Stoffe, organische Substanzen oder Quantenpunkte umfassen. Allgemein können sie sich dadurch auszeichnen, dass sie Licht einer Wellenlänge absorbieren und dadurch angeregte Fluoreszenzstrahlung aussenden können. Zum Bereitstellen des Anregungslichtstrahls zum Anregen des fluoreszierenden Bereichs der Fluoreszenzlage können verschiedene bekannte Prinzipien zum Einsatz kommen, beispielsweise ein sogenannter Flying-Spot-Projektor, der einen Lichtstrahl mit Hilfe eines mikromechanischen Spiegels lenken kann. Lenkt der Projektor also Anregungslicht, vorzugsweise gebündelt, auf einen phosphorbeschichteten Punkt des Schirms, so kann der Phosphor an dieser Stelle Fluoreszenzstrahlung aussenden. Diese kann sich zunächst in alle Raumrichtungen ausbreiten und das Trägerelement durchdringen, das aus einem für die jeweils relevanten Wellenlängen transparente Substrat ausgebildet ist, das bedeutet vor allem Transparenz im Bereich der phosphorkonvertierten Strahlung aufweisen kann. Grundsätzlich kann beispielsweise eine Glasscheibe als Substrat geeignet sein. Aufgrund der Transparenz des Trägerelements kann ein von der Fluoreszenzlage bereitgestellter Fluoreszenzlichtstrahl durch das Trägerelement zu der Optiklage geleitet werden, die auf der der Fluoreszenzlage gegenüberliegenden Seite des Trägerelements angeordnet ist. Die Optiklage ist nun ausgebildet, das Licht zu sammeln und in eine besondere Raumrichtung abzustrahlen, erfindungsgemäß auf eine mit dem erzeugten Licht zu beleuchtende Fläche, das heißt auf einen Zielbereich der mikrofluidischen Einrichtung. Hierfür kann die Optiklage beispielsweise mit optischen Elementen ausgebildet sein, die geeignet sein können, das in der Phosphorschicht erzeugte Licht in eine gewünschte Richtung zu lenken. Beispielsweise kann die Optiklage holografische optische Elemente (HOE) aufweisen, besonders bevorzugt Volumenhologramme oder Transmissionshologramme, die beispielsweise in eine geeignete Polymerschicht eingebracht sein können. Alternativ können aber auch Oberflächenhologramme oder diffraktive Elemente zum Einsatz kommen. Diese Elemente können ausgeformt sein, Licht von einem Punkt des gegenüberliegenden Phosphors mit einer bestimmten Wellenlänge zu sammeln und gebündelt in die gewünschte Raumrichtung abzustrahlen. Vorteilhafterweise kann dadurch durch Fluoreszenz erzeugte Strahlung gezielt auf einen Bereich der mikrofluidischen Einrichtung gelenkt werden, an dem eine mit der betreffenden Wellenlänge durchzuführende Reaktion während eines Analyseprozesses besonders vorteilhaft sein kann.

Gemäß einer Ausführungsform kann die Optiklage ausgebildet sein, um den Anregungslichtstrahl unfokussiert passieren zu lassen. Beispielsweise kann bei einem Bereitstellen des Anregungslichtstrahls von Seiten der Optiklage die Optiklage zunächst wirkungslos bleiben, da sie ausschließlich zum Fokussieren der Wellenlängen der Phosphoremissionen, nicht die des Anregungslichtes ausgebildet sein kann. Der Fluoreszenzlichtstrahl kann dann jedoch weiterhin durch die Optiklage gesammelt und weiter zum Zielbereich geleitet werden. Das hat den Vorteil, dass die Beleuchtungsvorrichtung von zwei verschiedenen Seiten beleuchtbar und damit variabel einsetzbar sein kann.

Gemäß einer Ausführungsform kann die Optiklage ausgebildet sein, um den Anregungslichtstrahl auf den fluoreszierenden Bereich zu fokussieren. Die Optiklage kann zum Beispiel ausgebildet sein, um Licht einer ersten Wellenlänge (die des Anregungslichts) auf den fluoreszierenden Bereich der Fluoreszenzlage zu fokussieren und gleichzeitig Licht einer anderen Wellenlänge (die des Fluoreszenzlichts) zu sammeln und in eine gewünschte Richtung zu lenken. Hierfür kann die Optiklage beispielsweise mit einem Multiplex-HOE oder einem zweiten, schichtweise über dem ersten angeordneten HOE ausgebildet sein, wodurch das Anregungslicht beeinflusst werden kann. So kann vorteilhafterweise das Anregungslicht einerseits auf den Phosphor fokussiert werden oder die Fokussierung kann dadurch verbessert werden und andererseits kann das phosphorkonvertierte Licht optimal weiter zur Zielfläche geleitet werden.

Gemäß einer Ausführungsform kann die Optiklage mit zumindest einem holografisch optischen Element ausgebildet sein. Ein solches holografisch optisches Element (HOE) kann beispielsweise ein Multiplex-Hologramm oder mehrere übereinandergeschichteten Einzelhologramme aufweisen. Die intrinsische Wellenlängenselektivität holografischer oder diffraktiver Strukturen ist bei der erfindungsgemäßen Anwendung ein Vorteil, weil es den Wellenlängenbereich des die Kartusche beleuchtenden Lichtes eng definiert. Unerwünschte, vom Phosphor, dem Glas oder per Streulicht verursachte Wellenlängen werden durch das HOE nicht abgelenkt und gelangen nicht oder nur in sehr geringen Anteilen auf die Kartusche. Alternativ zu Volumenhologrammen können beispielsweise auch Oberflächenhologramme eingesetzt werden. Verwendet man ein geeignetes Substrat, zum Beispiel einen Kunststoff wie Polycarbonat oder Polymethylmetacrylat, könnten diese auch direkt in das Substrat eingeprägt werden. Dies ist auch mit diffraktiven optischen Elementen denkbar.

Gemäß einer Ausführungsform kann die Fluoreszenzlage ausgebildet sein, um den Fluoreszenzlichtstrahl schmalbandig auszugeben. Unter schmalbandig ist dabei vorzugsweise eine spektrale Halbwertsbreite von weniger als 100 Nanometer (nm), bevorzugt weniger als 50 nm, besonders bevorzugt weniger als 30 nm, beispielsweise 40 oder 20 nm zu verstehen. Beispielsweise kann die Fluoreszenzlage besonders schmalbandige emittierende Material- und Metamaterialklassen oder Quantenpunkte umfassen, wie beispielsweise SrGa2S4:Eu2+ (Emission bei 540nm, FWHM ca. 45nm) oder Ba0.8Sr0.2Mg3SiN4:Eu (Emission bei 635nm, FWHM ca. 45nm). Dies ist besonders vorteilhaft, wenn der jeweilige Phosphor nur für einen Anregungskanal genutzt und für andere Kanäle gewechselt wird.

Gemäß einer Ausführungsform kann die Fluoreszenzlage einen ersten fluoreszierenden Bereich zum Ausgeben eines ersten Fluoreszenzlichtstrahls in einer ersten Wellenlänge und mindestens einen weiteren fluoreszierenden Bereich zum Ausgeben eines weiteren Fluoreszenzlichtstrahls in einer weiteren Wellenlänge umfassen. Beispielsweise können verschiedene Bereiche der Fluoreszenzlage mit verschiedenen Phosphoren ausgebildet sein. Jeder Position auf der Beleuchtungsvorrichtung kann damit ein bestimmter fluoreszierender Bereich zugeordnet werden, der die Wellenlänge des erzeugten Fluoreszenzlichts festlegen kann. Die einzelnen Bereiche können dabei beispielsweise schachbrett- oder wabenartig verteilt sein. Das hat den Vorteil, dass die Beleuchtungsvorrichtung für einer Mehrzahl verschiedener Reaktionsprozesse, in denen unterschiedliche Wellenlängen benötigt werden können, eingesetzt werden kann.

Zudem kann die Optiklage mindestens einen ersten Optikbereich zum Überführen des ersten Fluoreszenzlichtstrahls in einen ersten Fokussierlichtstrahl und einen weiteren Optikbereich zum Überführen des weiteren Fluoreszenzlichtstrahls in einen weiteren Fokussierlichtstrahl aufweisen. Dazu können die Optikbereiche insbesondere HOEs umfassen. Beispielsweise kann jedem fluoreszierenden Bereich auf der Fluoreszenzlage ein Optikbereich auf der Optiklage zugeordnet sein. Insbesondere können somit wie oben beschrieben in den fluoreszierenden Bereichen unterschiedliche Phosphore enthalten sein, welchen jeweils ein HOE aus einem Optikbereich zugeordnet ist. Je nach dem, welcher fluoreszierende Bereich durch den Anregungslichtstrahl angeregt wird, kann der betreffende Optikbereich dieses Fluoreszenzlicht sammeln und auf einen gewünschten Punkt auf der mikrofluidischen Einrichtung lenken. Dadurch kann vorteilhafterweise der Lichtstrahl einerseits auf eine für die Analyse einer Probe optimale Wellenlänge reduziert werden und andererseits kann die Strahlrichtung jeweils möglichst exakt auf den Zielbereich geleitet werden, an dem die Probe angeordnet ist.

Gemäß einer Ausführungsform kann die Optiklage ausgebildet sein, um den ersten Fokussierlichtstrahl auf einen ersten Zielbereich und den weiteren Fokussierlichtstrahl auf einen weiteren Zielbereich der mikrofluidischen Einrichtung zu lenken. Beispielsweise können verschiedene Optikbereiche der Optiklage ausgebildet sein, um den Fokussierlichtstrahl auf jeweils unterschiedliche Zielbereiche der mikrofluidischen Einrichtung zu lenken. Anders ausgedrückt kann für jede Position auf der Zielfläche jeweils eine Fläche von jedem Phosphor auf dem Phosphorschirm zur Verfügung stehen, dessen Licht dann auf eben diese Zielposition gelenkt werden kann. Dies ermöglicht vorteilhafterweise eine durch Steuerung des Projektors definierbare Intensitätsverteilung mit allen verfügbaren Wellenlängen.

Gemäß einer Ausführungsform kann die Optiklage ausgebildet sein, um den ersten Fokussierlichtstrahl und den weiteren Fokussierlichtstrahl auf einen ersten Zielbereich der mikrofluidischen Einrichtung zu lenken. Beispielsweise kann die gesamte Beleuchtungsvorrichtung zur Beleuchtung eines gemeinsamen Punktes oder Bereiches der mikrofluidischen Einrichtung genutzt werden. Dabei kann mittels eines zielgerichteten Anregungslichtstrahls dann nur gesteuert werden, welche Wellenlänge gerade eingesetzt wird, indem er selektiv nur die Flächen eines Phosphortyps anregen kann. Dies kann vorteilhaft sein, wenn man eine große Phosphor-Gesamtfläche einsetzen möchte, um die Strahlungslast zu verteilen.

Gemäß einer Ausführungsform kann die Beleuchtungsvorrichtung eine primäre Lichtquelle umfassen, die ausgebildet sein kann, um den Anregungslichtstrahl zum Anregen der Fluoreszenzlage auszugeben. Beispielsweise kann die primäre Lichtquelle als Laserprojektor ausgebildet sein und beispielsweise eine Laserdiode, eine Linse und einen beweglichen Spiegel umfassen. Bevorzugt kann es sich um einen Flying-Spot-Projektor handeln, es sind aber auch andere Typen (DLP, LCOS) denkbar. Vorteilhafterweise kann die Lichtquelle den Anregungslichtstrahl auf ausgewählte Bereiche der Fluoreszenzlage lenken.

Zudem kann die Lichtquelle seitens der Optiklage und zusätzlich oder alternativ seitens der Fluoreszenzlage angeordnet sein. Vorteilhafterweise kann ein Aufbau der Beleuchtungsvorrichtung gemäß den Umständen am Einsatzort variiert und insgesamt zum Beispiel kompakter gebaut werden.

Zudem wird ein Analysegerät zum Analysieren einer Probe in einer mikrofluidischen Einrichtung vorgestellt, wobei das Analysegerät einen Aufnahmebereich zum Aufnehmen der mikrofluidischen Einrichtung und eine Variante der zuvor vorgestellten Beleuchtungsvorrichtung umfasst. Beispielsweise kann das Analysegerät zur Integration eines molekulardiagnostischen Assays auf einer Kunststoffkartusche mit einem mikrofluidischen Netzwerk ausgebildet sein. Das eigentliche Gerät kann konstruiert sein, solche Kartuschen zu prozessieren, d.h. es kann zum Beispiel mikrofluidische Vorgänge auf der Kartusche steuern und bestimmte Bereiche heizen und zusätzlich oder alternativ beleuchten. Dabei kann das Analysegerät zum Beispiel eine Kamera mit wechselbaren Bandpassfiltern aufweisen, die einen bestimmten Bereich der Kartusche betrachten kann. Diese Bereiche können vorteilhafterweise mit der Beleuchtungsvorrichtung zum Beispiel mit Licht eines definierten Wellenlängenbereichs beleuchtet werden, um dort Fluoreszenz anzuregen, die diagnostisch ausgewertet werden kann.

Zudem wird gemäß Anspruch 7 ein Verfahren zum Beleuchten einer in einem Aufnahmebereich eines Analysegeräts angeordneten mikrofluidischen Einrichtung vorgestellt.

Dieses Verfahren kann beispielsweise in Software oder Hardware oder in einer Mischform aus Software und Hardware beispielsweise in einem Steuergerät implementiert sein.

Ausführungsbeispiele des hier vorgestellten Ansatzes sind in den Zeichnungen dargestellt und in der nachfolgenden Beschreibung näher erläutert. Es zeigt:
Fig. 1 eine schematische Darstellung eines Ausführungsbeispiels eines Analysegeräts;
Fig. 2 eine schematische Darstellung einer Beleuchtungsvorrichtung gemäß einem Ausführungsbeispiel;
Fig. 3 eine schematische Darstellung einer Beleuchtungsvorrichtung gemäß einem Ausführungsbeispiel;
Fig. 4 eine schematische Darstellung einer Beleuchtungsvorrichtung gemäß einem Ausführungsbeispiel;
Fig. 5 eine schematische Darstellung einer Beleuchtungsvorrichtung gemäß einem Ausführungsbeispiel;
Fig. 6 eine schematische Darstellung einer Beleuchtungsvorrichtung gemäß einem Ausführungsbeispiel; und
Fig. 7 ein Ablaufdiagramm eines Verfahrens zum Beleuchten einer in einem Aufnahmebereich eines Analysegeräts angeordneten mikrofluidischen Einrichtung gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

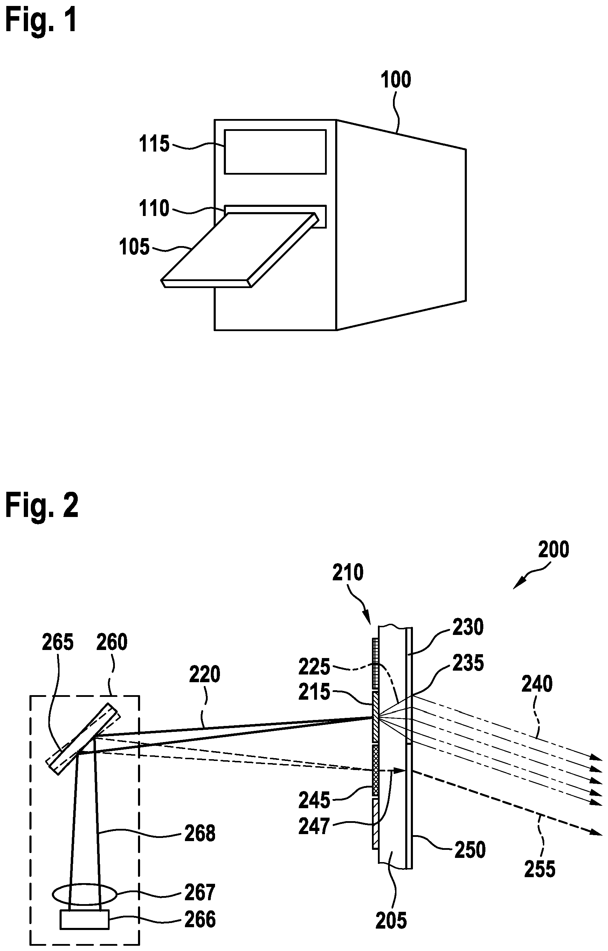

Fig. 1 zeigt eine schematische Darstellung eines Ausführungsbeispiels eines Analysegeräts 100. Das Analysegerät 100 ist in diesem Ausführungsbeispiel ausgebildet, um eingegebene Proben zu analysieren, wodurch zum Beispiel PCR-Tests durchführbar sind. Hierfür ist eine mikrofluidische Einrichtung 105, bei der es sich lediglich beispielhaft um eine Kartusche mit einem Kunststoffgehäuse und einem mikrofluidischen Netzwerk zum Prozessieren der Probe handelt, in einen Aufnahmebereich 110 eingebbar. In diesem Ausführungsbeispiel umfasst das Analysegerät weiterhin ein Display 115 mit einer Touchfunktion, mittels dem lediglich beispielhaft Einstellungen zum gewünschten Analyseprozesses manuell eingebbar sind. Zudem ist das Display 115 lediglich beispielhaft ausgebildet, um Analyseergebnisse anzuzeigen.

Mit anderen Worten sieht das Konzept des Analysegeräts die Integration eines molekulardiagnostischen Assays auf einer Kunststoffkartusche mit einem mikrofluidischen Netzwerk vor. Das eigentliche Gerät ist konstruiert, solche Kartuschen zu prozessieren, das heißt, es kann mikrofluidische Vorgänge auf der Kartusche steuern und bestimmte Bereiche heizen und zusätzlich oder alternativ beleuchten. Insbesondere umfasst es in diesem Ausführungsbeispiel eine Beleuchtungsvorrichtung, wie sie in den folgenden Figuren 2 bis 4 näher beschrieben wird, die Fluoreszenzsignale anregen und auswerten kann. Beispielhaft besteht diese Einheit aus zwei Teilen. Erstens aus einer Kamera mit wechselbaren Bandpassfiltern, die einen bestimmten Bereich der Kartusche betrachtet. Zweitens aus einer Vorrichtung, die ausgebildet ist, um bestimmte Bereiche der Kartusche mit Licht eines definierten Wellenlängenbereichs zu beleuchten, um dort Fluoreszenz anzuregen. Diese Bereiche sind im Sichtbereich der Kamera angeordnet.

Fig. 2 zeigt eine schematische Darstellung einer Beleuchtungsvorrichtung 200 gemäß einem Ausführungsbeispiel. Die Beleuchtungsvorrichtung 200 ist ausgebildet, um eine mikrofluidischen Einrichtung in einem Aufnahmebereich eines Analysegeräts, wie es in der vorangegangenen Figur beschrieben wurde, zu beleuchten. Die Beleuchtungsvorrichtung umfasst ein Trägerelement 205, bei dem es sich in einem Ausführungsbeispiel um eine transparente Glasscheibe handelt. An dem Trägerelement 205 ist eine Fluoreszenzlage 210 mit einem fluoreszierenden Bereich 215 angeordnet, der ausgebildet ist, um angeregt durch einen Anregungslichtstrahl 220 einen Fluoreszenzlichtstrahl 225 auszugeben, wobei das Trägerelement 205 transparent für die Wellenlänge des Fluoreszenzlichtstrahls 225 ausgebildet ist. Zudem umfasst die Beleuchtungsvorrichtung 200 eine auf einer der Fluoreszenzlage 210 gegenüberliegenden Seite des Trägerelements 205 angeordnete Optiklage 230 mit einem Optikbereich 235, der ausgebildet ist, um den Fluoreszenzlichtstrahl 225 in einen fokussierten Fokussierlichtstrahl 240 zu überführen und den Fokussierlichtstrahl 240 auf einen Zielbereich der mikrofluidischen Einrichtung zu lenken. Dazu kann der Optikbereich 235 vorzugsweise ein entsprechend ausgebildetes HOE umfassen.

In einem Ausführungsbeispiel ist der fluoreszierende Bereich 215 der Fluoreszenzlage 210 ausgebildet, um den Fluoreszenzlichtstrahl 225 in einer ersten Wellenlänge auszugeben. Zudem umfasst die Fluoreszenzlage 210 der Beleuchtungsvorrichtung 200 in einem Ausführungsbeispiel einen weiteren fluoreszierenden Bereich 245 zum Ausgeben eines weiteren Fluoreszenzlichtstrahls 247 in einer weiteren Wellenlänge. Gleichermaßen wie der Optikbereich 235 ausgebildet ist, um den Fluoreszenzlichtstrahl 225 in einen Fokussierlichtstrahl 240 zu überführen, ist lediglich beispielhaft ein weiterer Optikbereich 250 der Optiklage 230 ausgebildet, um den weiteren Fluoreszenzlichtstrahl 247 in einen weiteren Fokussierlichtstrahl 255 zu überführen. Hierfür sind der Optikbereich 235 und der weitere Optikbereich 250 beispielhaft direkt gegenüber dem fluoreszierenden Bereich 215 und dem weiteren fluoreszierenden Bereich 245 an dem Trägerelement 205 angeordnet und umfassen vorzugsweise entsprechend ausgebildete holografische optische Elemente (HOE).

Mit anderen Worten umfasst die Beleuchtungsvorrichtung 200, die auch als Phosphorschirm bezeichnet werden kann, ein für die jeweils relevanten Wellenlängen transparentes Substrat. Das bedeutet vor allem Transparenz im Bereich des Fluoreszenzlichtstrahls 225 beziehungsweise der phosphorkonvertierten Strahlung. Das genannte Substrat ist auf der einen Seite mit einem oder mehreren Leuchtstoffen beschichtet. Aus historischen Gründen werden diese in Fachkreisen auch als Phosphore bezeichnet, was jedoch nichts mit dem gleichnamigen chemischen Element zu tun hat. Sie umfassen in einem Ausführungsbeispiel mehrere Material- und Metamaterialklassen wie zum Beispiel dotierte anorganische kristalline oder amorphe Stoffe, organische Substanzen oder Quantenpunkte. Allgemein zeichnen sie sich dadurch aus, dass sie Licht einer Wellenlänge absorbieren und dadurch angeregte Fluoreszenzstrahlung aussenden können. Auf der den Leuchtstoffen abgewandten Seite ist das Substrat mit optischen Elementen versehen, die geeignet sind, das in der Phosphorschicht erzeugte Licht in eine gewünschte Richtung zu lenken. In einem Ausführungsbeispiel handelt es sich bei diesen optischen Elementen der Optiklage 230 wie oben beschrieben um holografische optische Elemente (HOE), wie lediglich beispielhaft Volumenhologramme. In einem anderen Ausführungsbeispiel kann die Optiklage Transmissionshologramme aufweisen, die vorzugsweise in eine geeignete Polymerschicht eingebracht sein können. Alternativ können auch Oberflächenhologramme oder diffraktive Elemente zum Einsatz kommen. Diese Elemente beziehungsweise der Optikbereich 235 sind eingerichtet, Licht von einem Punkt des gegenüberliegenden fluoreszierenden Bereichs 215 mit einer bestimmten Wellenlänge zu sammeln und gebündelt in eine besondere Raumrichtung abzustrahlen.

In einem Ausführungsbeispiel umfasst die Beleuchtungsvorrichtung 200 zudem eine primäre Lichtquelle 260, die ausgebildet ist, um den Anregungslichtstrahl 220 zum Anregen der Fluoreszenzlage 210 auszugeben. Dabei ist die Lichtquelle 260 lediglich beispielhaft seitens der Fluoreszenzlage 210 angeordnet, die wiederum in einem Ausführungsbeispiel ausgebildet ist, um angeregt durch den Anregungslichtstrahl 220 den Fluoreszenzlichtstrahl 225 sowie den weiteren Fluoreszenzlichtstrahl 247 schmalbandig auszugeben. Zur Projektion des Anregungslichtstrahls 220 sind verschiedene Prinzipien einsetzbar, vorzugsweise aber ein Flying-Spot-Projektor, der einen Lichtstrahl mit Hilfe eines mikromechanischen Spiegels 265 lenkt. Die in dieser Figur gezeigte Anordnung aus Laserdiode 266, Linse 267 und Spiegel 265, sowie der skizzierte Strahlengang des Laserlichts 268 stehen repräsentativ für einen solchen Laserprojektor. Dieser bietet unter anderem die Möglichkeit, dass der Projektor den Anregungslichtstrahl 220 auf ausgewählte Bereiche der Fluoreszenzlage 210 lenkt. Anstelle eines einzigen mikromechanischen Spiegels können auch mehre Spiegel eingesetzt werden, beispielsweise zwei einachsige Spiegel. In anderen Ausführungsbeispielen können als primäre Lichtquelle auch andere Typen, wie zum Beispiel DLP oder LCOS eingesetzt werden. Lenkt die Lichtquelle 260 also den Anregungslichtstrahl 220, lediglich beispielhaft gebündelt, auf den fluoreszierenden Bereich 215, so sendet der Phosphor an dieser Stelle Fluoreszenzstrahlung aus. Diese breitet sich zunächst in alle Raumrichtungen aus. Die HOE auf der anderen Seite des Trägerelements 205 sind nun wie oben beschrieben ausgebildet, das Licht zu sammeln und in eine besondere Raumrichtung abzustrahlen, beispielhaft auf eine mit dem erzeugten Licht zu beleuchtende Fläche. Die intrinsische Wellenlängenselektivität holografischer oder diffraktiver Strukturen ist bei der erfindungsgemäßen Anwendung ein Vorteil, weil es den Wellenlängenbereich des die Kartusche beleuchtenden Lichtes eng definiert. Unerwünschte, vom Phosphor, dem Glas oder per Streulicht verursachte Wellenlängen sind durch das HOE nicht ablenkbar und gelangen nicht oder nur in sehr geringen Anteilen auf die Kartusche.

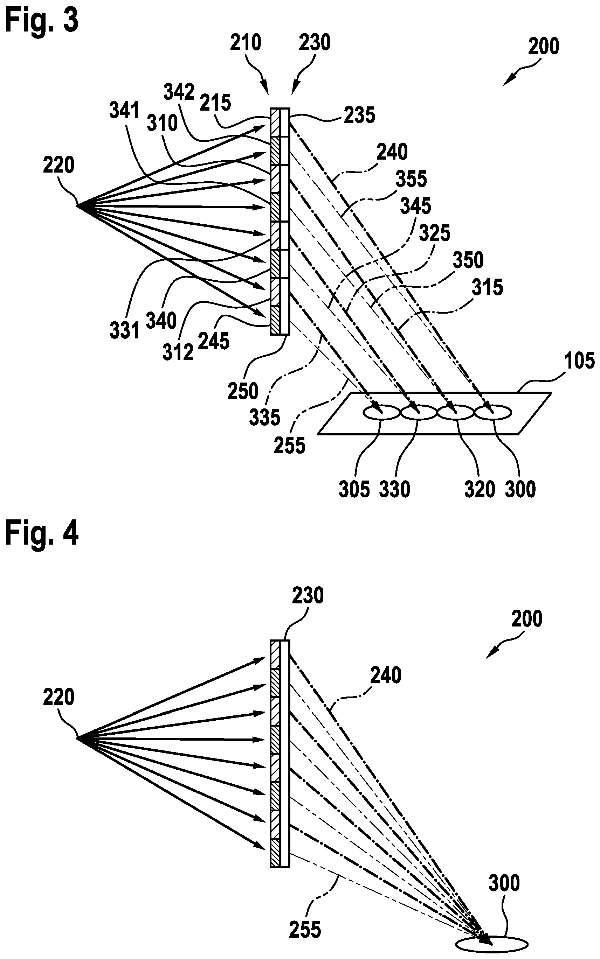

Fig. 3 zeigt eine schematische Darstellung einer Beleuchtungsvorrichtung 200 gemäß einem Ausführungsbeispiel. Die hier dargestellte Beleuchtungsvorrichtung 200 entspricht oder ähnelt der in der vorangegangenen Figur 2 beschriebenen Beleuchtungsvorrichtung. Die Beleuchtungsvorrichtung 200 umfasst ein Trägerelement 205, das heißt ein transparentes Substrat, das auf der einen Seite mit der Fluoreszenzlage 210 beschichtet ist und auf der anderen die Optiklage 230 aufweist, bei der es sich in diesem Ausführungsbeispiel um eine Anordnung holografisch optischer Elemente (HOE) handelt. Die Fluoreszenzlage 210 umfasst in diesem Ausführungsbeispiel einen ersten fluoreszierenden Bereich 215, der beispielhaft dem in der vorangegangenen Figur 2 beschriebenen fluoreszierenden Bereich entspricht und der ausgebildet ist, um einen ersten Fluoreszenzlichtstrahl in einer ersten Wellenlänge auszugeben. Weiterhin umfasst die Fluoreszenzlage 210 einen weiteren fluoreszierenden Bereich 245 zum Ausgeben eines weiteren Fluoreszenzlichtstrahls in einer sich von der ersten Wellenlänge unterscheidenden weiteren Wellenlänge. Der erste Fluoreszenzlichtstrahl ist von einem ersten Optikbereich 235, der in diesem Ausführungsbeispiel dem in der vorangegangenen Figur 2 beschriebenen Optikbereich entspricht, in einen ersten Fokussierlichtstrahl 240 überführbar, der weiterhin die beispielhafte erste Wellenlänge λ₁ aufweist. Der erste Fokussierlichtstrahl 240 ist lediglich beispielhaft auf einen ersten Zielbereich 300 der mikrofluidischen Einrichtung 105 lenkbar. Der weitere Optikbereich 250 ist in diesem Ausführungsbeispiel ausgebildet, um den weiteren Fluoreszenzlichtstrahl in einen weiteren Fokussierlichtstrahl 255 zu überführen, der weiterhin die beispielhafte weitere Wellenlänge λ₂ aufweist. Der weitere Fokussierlichtstrahl 255 ist dabei lediglich beispielhaft auf einen von dem ersten Zielbereich 300 entfernt angeordneten weiteren Zielbereich 305 der mikrofluidischen Einrichtung 105 lenkbar.

In einem Ausführungsbeispiel weist die Fluoreszenzlage 210 zudem beispielhaft einen zweiten ersten Fluoreszenzbereich 310, einen dritten ersten Fluoreszenzbereich 331 und einen vierten ersten Fluoreszenzbereich 312 auf, wobei alle ersten Fluoreszenzbereiche 215, 310, 331, 312 ausgebildet sind, Fluoreszenzlicht in einer ersten Wellenlänge λ₁ auszugeben. Dabei ist die Optiklage 230 ausgebildet, um den ersten Fluoreszenzlichtstrahl in einen ersten Fokussierlichtstrahl 225 zu überführen und auf den ersten Zielbereich 300 zu lenken. Gleichermaßen ist in einem Ausführungsbeispiel ein zweiter erster Fluoreszenzlichtstrahl des zweiten ersten fluoreszierenden Bereichs 310 in einen zweiten ersten Fokussierlichtstrahl 315 überführbar und auf einen zweiten Zielbereich 320 lenkbar. Gleichermaßen ist in einem Ausführungsbeispiel ein dritter erster Fluoreszenzlichtstrahl des dritten ersten fluoreszierenden Bereichs 331 in einen dritten ersten Fokussierlichtstrahl 325 überführbar und auf einen dritten Zielbereich 330 lenkbar. Gleichermaßen ist in einem Ausführungsbeispiel ein vierter erster Fluoreszenzlichtstrahl des vierten ersten fluoreszierenden Bereichs 312 in einen vierten ersten Fokussierlichtstrahl 335 überführbar und auf den weiteren Zielbereich 305 lenkbar.

In einem Ausführungsbeispiel weist die Fluoreszenzlage 210 zudem beispielhaft einen zweiten weiteren Fluoreszenzbereich 340, einen dritten weiteren Fluoreszenzbereich 341 und einen vierten weiteren Fluoreszenzbereich 342 auf, wobei alle weiteren Fluoreszenzbereiche 245, 340, 341, 342 ausgebildet sind, Fluoreszenzlicht in einer zweiten Wellenlänge λ₂ auszugeben. Dabei ist die Optiklage 230 ausgebildet, um den weiteren Fluoreszenzlichtstrahl in einen weiteren Fokussierlichtstrahl 255 zu überführen und auf den weiteren Zielbereich 305 zu lenken. Gleichermaßen ist in einem Ausführungsbeispiel ein zweiter weiterer Fluoreszenzlichtstrahl des zweiten weiteren fluoreszierenden Bereichs 340 in einen zweiten weiteren Fokussierlichtstrahl 345 überführbar und auf den dritten Zielbereich 330 lenkbar. Gleichermaßen ist in einem Ausführungsbeispiel ein dritter weiterer Fluoreszenzlichtstrahl des dritten weiteren fluoreszierenden Bereichs 341 in einen dritten weiteren Fokussierlichtstrahl 350 überführbar und auf den zweiten Zielbereich 320 lenkbar. Gleichermaßen ist in einem Ausführungsbeispiel ein vierter weiterer Fluoreszenzlichtstrahl des vierten weiteren fluoreszierenden Bereichs 342 in einen vierten weiteren Fokussierlichtstrahl 355 überführbar und auf den ersten Zielbereich 300 lenkbar.

Mit anderen Worten ist in einem Ausführungsbeispiel jeder Position auf der Zielfläche jeweils eine Fläche von jedem Phosphor auf dem Phosphorschutzschirm zur Verfügung gestellt, dessen Licht dann auf eben diese Zielposition lenkbar ist. Dabei legen die Phosphorflächen die Wellenlängen fest und die HOEs die Richtungen. Beide sind in einem Ausführungsbeispiel unabhängig voneinander einstellbar. Dies ermöglicht eine durch Steuerung des Projektors definierbare Intensitätsverteilung mit allen verfügbaren Wellenlängen.

Fig. 4 zeigt eine schematische Darstellung einer Beleuchtungsvorrichtung 200 gemäß einem Ausführungsbeispiel. Die hier dargestellte Beleuchtungsvorrichtung 200 entspricht oder ähnelt der in den vorangegangenen Figuren 2 und 3 beschriebenen Beleuchtungsvorrichtung. Dabei ist in diesem Ausführungsbeispiel die Optiklage 230 ausgebildet, um den ersten Fokussierlichtstrahl 240 und den weiteren Fokussierlichtstrahl 255 auf den ersten Zielbereich 300 der mikrofluidischen Einrichtung zu lenken. In diesem Ausführungsbeispiel ist dementsprechend die gesamte Beleuchtungsvorrichtung 200 zur Beleuchtung eines gemeinsamen Punktes oder Bereiches der Zielfläche nutzbar. Das heißt, dass lediglich beispielhaft ermöglicht ist, alle Bereiche des Phosphorschirms beziehungsweise des Schirms auf ein Ziel strahlen zu lassen. Eine Lichtquelle zum Bereitstellen eines Anregungslichtstrahls 220 steuert lediglich beispielhaft, welche Wellenlänge gerade einzusetzen ist, indem sie selektiv nur die Flächen eines Phosphortyps anregt. Dadurch ist ermöglicht, beim Einsetzen einer großen Phosphor-Gesamtfläche die Strahlungslast zu verteilen.

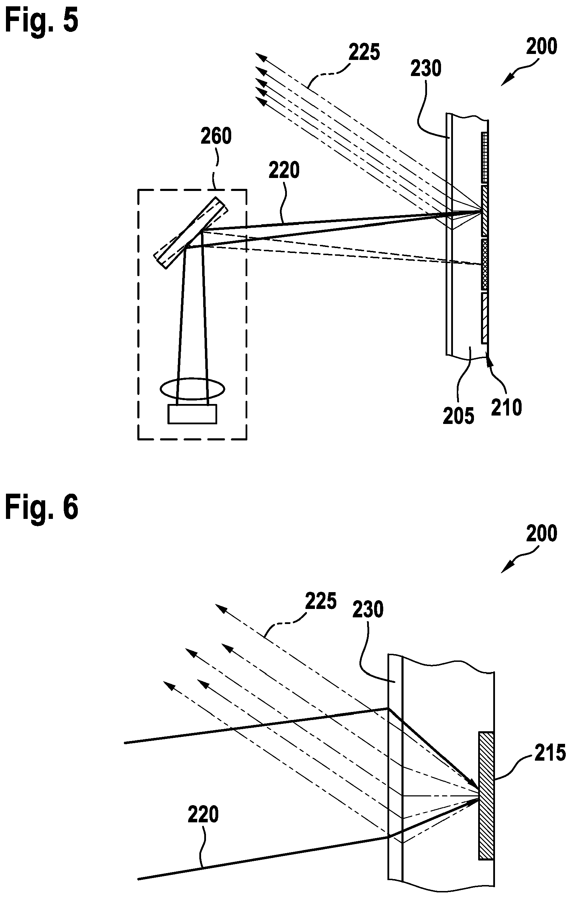

Fig. 5 zeigt eine schematische Darstellung einer Beleuchtungsvorrichtung 200 gemäß einem Ausführungsbeispiel. Die hier dargestellte Beleuchtungsvorrichtung 200 entspricht oder ähnelt der in den vorangegangenen Figuren 2, 3 und 4 beschriebenen Beleuchtungsvorrichtung. In diesem Ausführungsbeispiel umfasst die Beleuchtungsvorrichtung 200 eine primären Lichtquelle 260, die ausgebildet ist, um den Anregungslichtstrahl 220 zum Anregen der Fluoreszenzlage 210 auszugeben. Dabei ist die Lichtquelle 260 lediglich beispielhaft seitens der Optiklage 230 angeordnet. Die Optiklage 230, die auch als holografische Schicht bezeichnet werden kann, ist in diesem Ausführungsbeispiel ausgebildet, um den Anregungslichtstrahl 220 unfokussiert passieren zu lassen. Anders ausgedrückt ist der Schirm in diesem Ausführungsbeispiel von der HOE-Seite beleuchtbar, wobei die holographisch optischen Elemente der Optiklage 230 zunächst wirkungslos bleiben, da sie in diesem Ausführungsbeispiel für die Wellenlängen der Phosphoremissionen, nicht die des Anregungslichtes ausgelegt sind. Das phosphorkonvertierte Licht, das heißt der Fluoreszenzlichtstrahl 225, ist jedoch ebenso wie in den in den vorangegangenen Figuren 2, 3 und 4 beschriebenen Ausführungsbeispielen durch die HOE sammelbar und weiterleitbar. Die Transparenz des Substrats des Trägerelements 205 auch für die Anregungswellenlänge ist in diesem Ausführungsbeispiel wichtig, aber technisch unproblematisch.

Fig. 6 zeigt eine schematische Darstellung einer Beleuchtungsvorrichtung 200 gemäß einem Ausführungsbeispiel. Die hier dargestellte Beleuchtungsvorrichtung 200 entspricht oder ähnelt der in den vorangegangenen Figuren 2, 3, 4 und 5 beschriebenen Beleuchtungsvorrichtung. Dabei ist Konkurrent zudem in der vorangegangenen Figur 5 beschriebenen Aufbau auch in dem hier dargestellten Ausführungsbeispiel der Anregungslichtstrahl 220 seitens der Optiklage 230 bereitgestellt. Zusätzlich ist in diesem Ausführungsbeispiel die Optiklage 230 ausgebildet, um den Anregungslichtstrahl 220 auf den fluoreszierenden Bereich 215 zu fokussieren. Dies ist lediglich beispielhaft durch ein Ausbilden der Optiklage 230 mit einem Multiplex-HOE ermöglicht. Das Multiplex-HOE ist lediglich beispielhaft ausgebildet, um Licht einer ersten Wellenlänge (dieses Anregungslichtstrahl) auf den Phosphor zu fokussieren und gleichzeitig Licht einer anderen Wellenlänge (die des phosphorkonvertierten Lichts) zu sammeln und in eine gewünschte Richtung zu lenken. In einem anderen Ausführungsbeispiel kann ein Fokussieren des Anregungslichts auf einen bestimmten fluoreszierenden den Bereich der Fluoreszenzlage zum Beispiel auch durch Verwenden eines zweiten, schichtweise über dem ersten angeordneten HOE beeinflusst werden. Somit ist in diesem Ausführungsbeispiel das Anregungslichtstrahl erst durch ein beispielhaftes HOE auf den Phosphor fokussierbar und das phosphorkonvertierte Licht ist weiter zu einer Zielfläche leitbar.

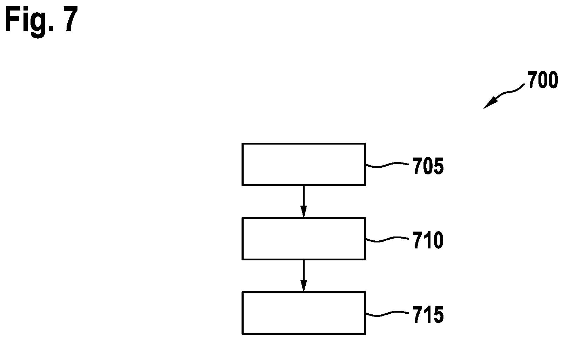

Fig. 7 zeigt ein Ablaufdiagramm eines Verfahrens 700 zum Beleuchten einer in einem Aufnahmebereich eines Analysegeräts angeordneten mikrofluidischen Einrichtung gemäß einem Ausführungsbeispiel. Das Verfahren 700 umfasst einen Schritt 705 des Ausgebens eines Fluoreszenzlichtstrahls ansprechend auf eine Anregungsstrahlung, einen Schritt 710 des Überführens des Fluoreszenzlichtstrahls in einen fokussierten Fokussierlichtstrahl und einen Schritt 715 des Lenkens des Fokussierlichtstrahls auf einen Zielbereich der mikrofluidischen Einrichtung. Mittels des Verfahrens 700 ist die Beleuchtung von einer oder mehrerer zusammenhängender Flächen, beispielsweise auf einer Lab-on-Chip-Kartusche, mit Licht ermöglicht. Anzahl, Form und Ausdehnung der Flächen sind dabei innerhalb eines gewissen Bereichs frei wählbar und flexibel elektronisch steuerbar. Das Licht selbst erfüllt die Anforderungen für die Fluoreszenz-Anregung molekulardiagnostischer Assays, idealerweise auch mit mehreren Farbkanälen. Dies bedeutet ein in Zentralwellenlänge und Breite genau definiertes Spektrum, beziehungsweise mehrere solcher Spektren, zwischen denen ein Umschalten möglich ist.

## Patentansprüche

1. Beleuchtungsvorrichtung (200) zum Beleuchten einer in einem Aufnahmebereich (110) eines Analysegeräts (100) angeordneten mikrofluidischen Einrichtung (105), wobei die Beleuchtungsvorrichtung (200) folgende Merkmale aufweist:
eine an einem Trägerelement (205) angeordnete Fluoreszenzlage (210) mit einem ersten fluoreszierenden Bereich (215), der ausgebildet ist, um angeregt durch einen Anregungslichtstrahl (220) einen ersten Fluoreszenzlichtstrahl (225) in einer ersten Wellenlänge auszugeben, und mit mindestens einem weiteren fluoreszierenden Bereich (245), der ausgebildet ist, um angeregt durch den Anregungslichtstrahl (220) einen weiteren Fluoreszenzlichtstrahl (247) in einer weiteren Wellenlänge auszugeben wobei das Trägerelement (205) transparent für die Wellenlänge der Fluoreszenzlichtstrahlen (225, 247) ausgebildet ist;
eine auf einer der Fluoreszenzlage (210) gegenüberliegenden Seite des Trägerelements (205) angeordnete Optiklage (230) mit einem ersten Optikbereich (235), der ausgebildet ist, um den ersten Fluoreszenzlichtstrahl (225) in einen fokussierten ersten Fokussierlichtstrahl (240) zu überführen und den ersten Fokussierlichtstrahl (240) auf einen ersten Zielbereich (300) der mikrofluidischen Einrichtung (105) zu lenken, und mit einem weiteren Optikbereich (250), der ausgebildet ist, um den weiteren Fluoreszenzlichtstrahl (247) in einen fokussierten weiteren Fokussierlichtstrahl (255) zu überführen und den weiteren Fokussierlichtstrahl (255) auf den ersten Zielbereich (300) oder einen weiteren Zielbereich (305) der mikrofluidischen Einrichtung (105) zu lenken, wobei es sich bei der Optiklage (230) um eine Anordnung holografisch optischer Elemente oder diffraktiver Elemente mit einer intrinsischen Wellenlängenselektivität handelt; und
eine primäre Lichtquelle (260), die ausgebildet ist, um den Anregungslichtstrahl (220) zum Anregen der Fluoreszenzlage (210) auszugeben.

2. Beleuchtungsvorrichtung (200) gemäß Anspruch 1, wobei die Optiklage (230) ausgebildet ist, um den Anregungslichtstrahl (220) unfokussiert passieren zu lassen.

3. Beleuchtungsvorrichtung (200) gemäß einem der vorangegangenen Ansprüche, wobei die Optiklage (230) ausgebildet ist, um den Anregungslichtstrahl (220) auf den fluoreszierenden Bereich (215) zu fokussieren.

4. Beleuchtungsvorrichtung (200) gemäß einem der vorangegangenen Ansprüche, wobei die Fluoreszenzlage (210) ausgebildet ist, um den Fluoreszenzlichtstrahl (225) schmalbandig, insbesondere mit einer spektralen Halbwertsbreite kleiner als 100 nm, bevorzugt kleiner als 50 nm, besonders bevorzugt kleiner als 30 nm, auszugeben.

5. Beleuchtungsvorrichtung (200) gemäß einem der vorangegangenen Ansprüche, wobei die Lichtquelle (260) seitens der Optiklage (230) und/oder seitens der Fluoreszenzlage (210) angeordnet ist.

6. Analysegerät (100) zum Analysieren einer Probe in einer mikrofluidischen Einrichtung (105), wobei das Analysegerät (100) einen Aufnahmebereich (110) zum Aufnehmen der mikrofluidischen Einrichtung (105) und eine Beleuchtungsvorrichtung (200) gemäß einem der vorangegangenen Ansprüche umfasst.

7. Verfahren (700) zum Beleuchten einer in einem Aufnahmebereich (110) eines Analysegeräts (100) angeordneten mikrofluidischen Einrichtung (105) unter Verwendung einer Beleuchtungsvorrichtung (200) gemäß einem der Ansprüche 1 bis 5, wobei das Verfahren (700) folgende Schritte (705, 710, 715) aufweist:
Ausgeben (705) eines Fluoreszenzlichtstrahls (225) ansprechend auf eine Anregungsstrahlung;
Überführen (710) des Fluoreszenzlichtstrahls (225) in einen ersten fokussierten Fokussierlichtstrahl (240) und mindestens einen weiteren Fluoreszenzlichtstrahl (247) unter Verwendung der an einem Trägerelement (205) angeordneten Fluoreszenzlage (210); und
Lenken (715) des ersten Fokussierlichtstrahls (240) auf einen ersten Zielbereich (300) der mikrofluidischen Einrichtung (105) und des weiteren Fluoreszenzlichtstrahls (247) auf den ersten Zielbereich (300) oder einen weiteren Zielbereich (305) der mikrofluidischen Einrichtung (105) unter Verwendung der Anordnung holografisch optischer Elemente oder diffraktiver Elemente mit einer intrinsischen Wellenlängenselektivität.

## Claims

1. Illumination apparatus (200) for illuminating a microfluidic device (105) arranged in a receiving region (110) of an analyser (100), wherein the illumination apparatus (200) has the following features:
a fluorescence layer (210) arranged on a carrier element (205), having a first fluorescent region (215) that is designed to emit a first fluorescence beam (225) at a first wavelength when excited by an excitation light beam (220), and having at least one further fluorescent region (245) that is designed to emit a further fluorescence beam (247) at a further wavelength when excited by the excitation light beam (220), with the carrier element (205) being transparent to the wavelengths of the fluorescence beams (225, 247);
an optics layer (230) arranged on a side of the carrier element (205) opposite the fluorescence layer (210), having a first optics region (235) that is designed to convert the first fluorescence beam (225) into a focused first focusing light beam (240) and steer the first focusing light beam (240) to a first target region (300) of the microfluidic device (105), and having a further optics region (250) that is designed to convert the further fluorescence beam (247) into a focused further focusing light beam (255) and steer the further focusing light beam (255) to the first target region (300) or a further target region (305) of the microfluidic device (105), with the optics layer (230) being an arrangement of holographic optical elements or diffractive elements that are inherently wavelength-selective; and
a primary light source (260) that is designed to output the excitation light beam (220) for excitation of the fluorescence layer (210).

2. Illumination apparatus (200) according to Claim 1, wherein the optics layer (230) is designed to allow the excitation light beam (220) to pass unfocused.

3. Illumination apparatus (200) according to either of the preceding claims, wherein the optics layer (230) is designed to focus the excitation light beam (220) on the fluorescent region (215).

4. Illumination apparatus (200) according to any of the preceding claims, wherein the fluorescence layer (210) is designed to output the fluorescence beam (225) within a narrow wavelength band, in particular with a spectral full width at half maximum of less than 100 nm, preferably less than 50 nm and particularly preferably less than 30 nm.

5. Illumination apparatus (200) according to any of the preceding claims, wherein the light source (260) is arranged on the side of the optics layer (230) and/or on the side of the fluorescence layer (210).

6. Analyser (100) for analysing a sample in a microfluidic device (105), wherein the analyser (100) comprises a receiving region (110) for receiving the microfluidic device (105) and an illumination apparatus (200) according to any of the preceding claims.

7. Method (700) for illuminating a microfluidic device (105) arranged in a receiving region (110) of an analyser (100) using an illumination apparatus (200) according to any of Claims 1 to 5, wherein the method (700) includes the following steps (705, 710, 715):
emitting (705) a fluorescence beam (225) in response to an excitation radiation;
converting (710) the fluorescence beam (225) into a first focused focusing light beam (240) and at least one further fluorescence beam (247) using the fluorescence layer (210) arranged on a carrier element (205); and
steering (715) the first focusing light beam (240) to a first target region (300) of the microfluidic device (105) and the further fluorescence light beam (247) to the first target region (300) or a further target region (305) of the microfluidic device (105) using the arrangement of holographic optical elements or diffractive elements that are inherently wavelength-selective.

## Revendications

1. Dispositif d'éclairage (200) pour éclairer un système microfluidique (105) disposé dans une zone de réception (110) d'un appareil d'analyse (100), le dispositif d'éclairage (200) comportant les caractéristiques suivantes :
une couche fluorescente (210) disposée sur un élément de support (205) avec une première zone fluorescente (215), qui est formée pour émettre un premier faisceau de lumière fluorescente (225) à une première longueur d'onde de manière excitée par un faisceau de lumière d'excitation (220), et avec au moins une autre zone fluorescente (245), qui est formée pour émettre un autre faisceau de lumière fluorescente (247) à une autre longueur d'onde de manière excitée par le faisceau de lumière d'excitation (220), l'élément de support (205) étant formé de manière transparente pour la longueur d'onde des faisceaux de lumière fluorescente (225, 247) ;
une couche optique (230) disposée sur un côté de l'élément de support (205) opposé à la couche fluorescente (210), avec une première zone optique (235), qui est formée pour convertir le premier faisceau de lumière fluorescente (225) en un premier faisceau de lumière de focalisation (240) focalisé et pour orienter le premier faisceau de lumière de focalisation (240) sur une première zone cible (300) du système microfluidique (105), et avec une autre zone optique (250), qui est formée pour convertir l'autre faisceau de lumière fluorescente (247) en un autre faisceau de lumière de focalisation (255) focalisé et pour orienter l'autre faisceau de lumière de focalisation (255) sur la première zone cible (300) ou une autre région cible (305) du système microfluidique (105), la couche optique (230) étant un ensemble d'éléments optiques holographiques ou d'éléments diffractifs avec une sélectivité en longueur d'onde intrinsèque ; et
une source de lumière (260) primaire, qui est formée pour émettre le faisceau de lumière d'excitation (220) pour exciter la couche fluorescente (210).

2. Dispositif d'éclairage (200) selon la revendication 1, la couche optique (230) étant formée pour permettre au faisceau de lumière d'excitation (220) de passer de manière non focalisée.

3. Dispositif d'éclairage (200) selon l'une des revendications précédentes, la couche optique (230) étant formée pour focaliser le faisceau de lumière d'excitation (220) sur la zone fluorescente (215).

4. Dispositif d'éclairage (200) selon l'une des revendications précédentes, la couche fluorescente (210) étant formée pour émettre le faisceau de lumière fluorescente (225) dans une bande étroite, en particulier avec une largeur spectrale de demi-valeur inférieure à 100 nm, de manière préférée inférieure à 50 nm, de manière particulièrement préférée inférieure à 30 nm.

5. Dispositif d'éclairage (200) selon l'une des revendications précédentes, la source de lumière (260) étant disposée du côté de la couche optique (230) et/ou du côté de la couche fluorescente (210).

6. Appareil d'analyse (100) pour analyser un échantillon dans un système microfluidique (105), l'appareil d'analyse (100) comprenant une zone de réception (110) pour recevoir le système microfluidique (105) et un dispositif d'éclairage (200) selon l'une des revendications précédentes.

7. Procédé (700) pour éclairer un système microfluidique (105) disposé dans une zone de réception (110) d'un appareil d'analyse (100) en utilisant un dispositif d'éclairage (200) selon l'une des revendications 1 à 5, le procédé (700) comportant des étapes suivantes (705, 710, 715) :
émission (705) d'un faisceau de lumière fluorescente (225) en réponse à un rayonnement d'excitation ;
conversion (710) du faisceau de lumière fluorescente (225) en un premier faisceau de lumière de focalisation (240) focalisé et en au moins un autre faisceau de lumière fluorescente (247) en utilisant la couche fluorescente (210) disposée sur un élément de support (205) ; et
orientation (715) du premier faisceau de lumière de focalisation (240) sur une première région cible (300) du système microfluidique (105) et l'autre faisceau de lumière fluorescente (247) sur la première zone cible (300) ou sur une autre zone cible (305) du système microfluidique (105) en utilisant l'ensemble d'éléments optiques holographiques ou d'éléments diffractifs avec une sélectivité en longueur d'onde intrinsèque.
